# EUROPEAN PATENT APPLICATION

(11) **EP 3 038 235 A1**
(43) Date of publication of application: **29.06.2016**
(21) Application number: 15202323.0
(22) Date of filing: 23.12.2015
(51) Int. Cl.: H02K 3/34, H02K 3/52

(54) **ROTARY ELECTRIC MACHINE STATOR AND MANUFACTURING METHOD OF SAME**

(30) Priority: 26.12.2014 JP 2014264503
(71) Applicant: Toyota Jidosha Kabushiki Kaisha, Toyota-shi, Aichi-ken 471-8571 (JP)
(72) Inventor: MASUGI, Yutaka, Toyota-shi, Aichi-ken 471-8571 (JP); MIZUTANI, Tetsushi, Toyota-shi, Aichi-ken 471-8571 (JP)
(74) Representative: Winter, Brandl, Fürniss, Hübner, Röss, Kaiser, Polte - Partnerschaft mbB

(57) **Abstract**

A rotary electric machine stator includes: a stator core including slots; a stator coil wound around the stator core by joining end portions of a plurality of segment conductors placed to be inserted into each of the slots; and an insulating layer (54) provided around the end portions including a joining portion at the end portions of the plurality of segment conductors. The segment conductor is constituted by an electric conductor (44) and an insulation coating (46) that covers the electric conductor (44). A conductor exposed portion (50) in which the insulation coating (46) is removed is formed in each of those end portions (38) of the segment conductors which are joined to each other. The insulating layer (54) is formed to be attached onto an insulating member (52) that covers a stepped portion (48) formed in a boundary between the insulation coating (46) and the conductor exposed portion (50).

## Description

### BACKGROUND OF THE INVENTION

### 1. Field of the Invention

The present invention relates to a rotary electric machine stator configured such that end portions of segment conductors placed to be inserted into a slot of a stator core are joined to each other so as to form a stator coil, and a manufacturing method of the same.

### 2. Description of Related Art

As a related art of the present invention, Japanese Patent Application Publication No. 2012-161153 (JP 2012-161153 A), for example, describes that: in a stator of a rotary electric machine, which includes an annular stator core having a plurality of slots in a circumferential direction and a stator winding configured such that terminal portions of a plurality of segment conductors placed to be inserted into a slot are connected to each other by welding and wound around the stator core, a joining portion at which the terminal portions of the plurality of segment conductors are jointed, is covered with a first insulation coating made of powder resin or resin having a high viscosity, and then, a surface of the first insulation coating is covered with a second insulation coating made of resin having a viscosity lower than the resin of the first insulation coating. It is described that this allows both securing of a high coverage and restraint of a pin hole.

Further, Japanese Patent Application Publication No. 2004-137903 (JP 2004-137903 A) describes an encapsulated-type electric compressor in which a coil end portion of a coil of a stator includes an insulating layer formed by applying and hardening powder epoxy resin so that the powder epoxy resin covers a joining end part of a coated conductor, which is a segment conductor, and a protection material layer formed by applying and hardening a refrigerant resistance varnish so as to cover the insulating layer. It is described that the coil end portion is hereby fixed by the insulating layer in an insulated manner and the insulating layer is protected by the protection material layer so as to be isolated from refrigerant or refrigerating machine oil, thereby making it possible to prevent elution of a component in the insulating layer.

As described in JP 2012-161153 A and JP 2004-137903 A, in a case where a plurality of generally U-shaped segment conductors each made of an insulation coated conductor is placed to be inserted into a slot and respective end portions where the conductors are exposed are connected to each other, and then, an insulation coating or an insulating layer is formed by applying and attaching power resin around the end portions, the powder resin is hard to be attached thereto due to a squarish stepped portion formed in a boundary between the insulation coating and a conductor exposed portion formed by removing the insulation coating from the end portions of the segment conductors, or due to occurrence of burr. This may result in that a thickness of the insulation coating becomes thin at a position corresponding to a corner of the stepped portion, so that an insulating property cannot be secured. Further, as described in JP 2012-161153 A and JP 2004-137903 A, if a step of further forming an insulating layer by coating by use of another resin material is added, a manufacturing process of the stator becomes complicated and its cost increases.

### SUMMARY OF THE INVENTION

An object of the present invention is to provide a rotary electric machine stator that is able to form an insulating layer provided so as to cover that joining end of a stator coil which is constituted by a segment conductor and its vicinity, in one insulation material adhesion step to such an extent that a sufficient insulating property can be secured, and a manufacturing method of the same.

A rotary electric machine stator according to one aspect of the present invention is a rotary electric machine stator including: an annular stator core having a plurality of slots provided in a circumferential direction of the annular stator core; a stator coil constituted by a plurality of segment conductors placed to be inserted into each of the slots, the stator coil wounding around the stator core, end portions of the plurality of segment conductors being joined to each other, and the segment conductors being each constituted by an electric conductor; an insulation coating covering the electric conductor; an insulating layer provided around the end portions of the segment conductors including a joining portion at which the end portions of the plurality of segment conductors are jointed. In the rotary electric machine stator, a conductor exposed portion in which the insulation coating is removed is formed in each of end portions of the segment conductors which are joined to each other; an insulating member is provided on an outer circumference of the segment conductors over the insulation coating and the conductor exposed portion; and the insulating layer is formed to be attached onto the insulating member.

In the rotary electric machine stator according to the one aspect of the present invention, the insulating member may cover a stepped portion formed in a boundary between the insulation coating and the conductor exposed portion. The insulating member may be an annular member covering the conductor exposed portion and part of the insulation coating.

Further, in the rotary electric machine stator according to one aspect of the present invention, the insulating member may be a tube having a heat-shrinkable property or elasticity.

Furthermore, in the rotary electric machine stator according to the one aspect of the present invention, the stator coil may include coil portions of a plurality of phases, and include a neutral line for connecting one end portions of the coil portions of respective phases to each other at a position apart from the coil end portion of the stator coil; and the insulating member and the insulating layer may be applied to a connecting portion for connecting each of the end portions of the coil portions of the respective phases to the neutral line.

A manufacturing method of a rotary electric machine stator according to another aspect of the present invention includes: a first step of placing leg portions of a plurality of segment conductors so as to be inserted into a slot of a stator core so that the leg portions are aligned in a radial direction, the plurality of segment conductors each having a generally U-shape and each having a leg portion configured such that a conductor exposed portion in which an insulation coating is removed is formed in an end portion of the leg portion; a second step of joining the conductor exposed portions formed in the end portions of the leg portions of the segment conductors and forming a stator coil wound around the stator core; a third step of fitting an insulating tube so as to cover a stepped portion formed in a boundary between the conductor exposed portion and the insulation coating of each of the segment conductors joined to each other; and a fourth step of forming an insulating layer so as to be attached around the end portions including a joining portion at which the end portions of the plurality of segment conductor are jointed each other.

In the manufacturing method of the rotary electric machine stator according to the another aspect of the present invention, the third step may include: a first substep of fitting the insulating tube around the stepped portion, and a second substep of tightly attaching the insulating tube to the conductor exposed portion and the insulation coating by thermal shrinkage.

A rotary electric machine stator according to another aspect of the present invention is a rotary electric machine stator including: an annular stator core having a plurality of slots in a circumferential direction; a stator coil wound around the stator core by joining end portions of a plurality of segment conductors placed to be inserted into each of the slots, the segment conductors each including an electric conductor and an insulation coating for covering the conductor except an end portion of the electric conductor; an insulating member placed over an conductor exposed portion and the insulation coating, the conductor exposed portion being that part of the end portion of the conductor which is not covered with the insulation coating; and an insulating layer attached to a surface of the insulating member around the end portions of the conductors including a joining portion at the end portions of the plurality of segment conductors.

According to the rotary electric machine stator and the manufacturing method thereof according to the above aspects of the present invention, since the stepped portion formed in the boundary between the insulation coating and the conductor exposed portion in the end portion of the segment conductor is covered with the insulating member, it is possible to form the insulating layer that can secure a sufficient insulating property on the insulating member in one insulation material adhesion step.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a partial perspective view of a rotary electric machine stator according to one embodiment of the present invention;
FIG. 2 is a perspective view of a segment conductor constituting a stator coil;
FIG. 3A is view illustrating a state where end portions of segment conductors are joined and coated in an insulated manner;
FIG. 3B is view illustrating a state where end portions of segment conductors are joined and coated in an insulated manner;
FIG. 3C is view illustrating a state where end portions of segment conductors are joined and coated in an insulated manner;
FIG. 3D is view illustrating a state where end portions of segment conductors are joined and coated in an insulated manner;
FIG. 3E is view illustrating a state where end portions of segment conductors are joined and coated in an insulated manner;
FIG. 4A is an enlarged sectional view illustrating that end portion of the segment conductor which is coated with an insulating layer, in a split manner in the stator of the present embodiment;
FIG. 4B is an enlarged sectional view illustrating that end portion of a segment conductor which is coated with an insulating layer, in a split manner in a stator of a comparative example;
FIG. 5 is a view illustrating a state where powder resin is attached to an end portion of a segment conductor at a coil end portion of a stator coil;
FIG. 6 is a view illustrating a state where high-viscosity resin is attached to the end portion of the segment conductor at the coil end portion of the stator coil;
FIG. 7A is a view illustrating two other examples of an insulating member;
FIG. 7B is a view illustrating two other examples of an insulating member; and
FIG. 8 is a view illustrating further two other examples of an insulating member.

### DETAILED DESCRIPTION OF EMBODIMENTS

The following describes an embodiment of the present invention in detail with reference to the attached drawings. In this description, specific shapes, materials, values, directions, and the like are examples to facilitate understanding of the present invention, and can be modified appropriately in conformity to a purpose, an object, a specification, and the like. Further, in a case where the following description includes a plurality of embodiments or modifications, it is assumed from the first that features of them are used in combination appropriately.

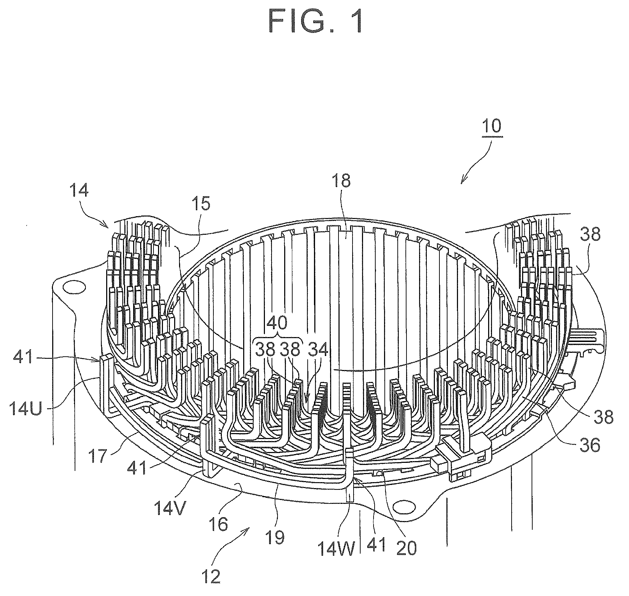

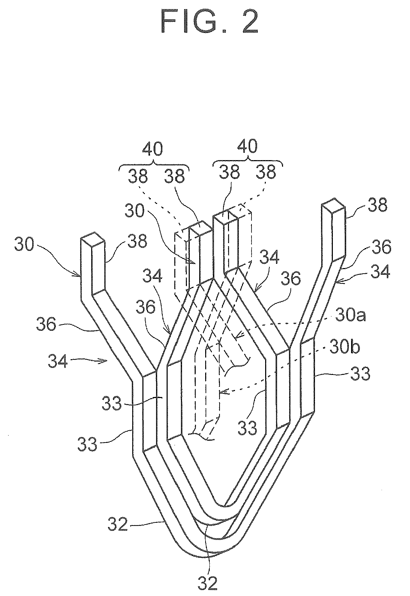

FIG. 1 is a partial perspective view of a rotary electric machine stator (hereinafter just referred to as the "stator" as appropriate) 10 according to one embodiment of the present invention. Further, FIG. 2 is a perspective view of a segment conductor 30 constituting a stator coil.

As illustrated in FIG. 1, the stator 10 includes a stator core 12 and a stator coil 14. The stator core 12 is, for example, a generally cylindrical member configured such that a plurality of electromagnetic steel sheets punched in an annular shape is laminated and connected together.

The stator core 12 includes a yoke 16 extending in an annular shape and teeth 18 projecting toward an inner side of the yoke 16. A plurality of teeth 18 is provided in a projecting manner at regular intervals in a circumferential direction. Slots 20 are formed between respective teeth 18. The slot 20 forms a groove opened at both axial ends of the stator 10 and at an inner peripheral side thereof. Note that a rotary electric machine is configured such that a rotor is rotationally provided at the inner peripheral side of the stator 10 via a gap therebetween.

The stator coil 14 is a field winding wound around the teeth 18 of the stator core 12. The present embodiment shows an example in which the stator coil 14 is wound around the stator core 12 in a distributed winding state. More specifically, as illustrated in FIG. 2, the stator coil 14 is configured such that a plurality of segment conductors 30 each having a generally U-shape is arranged in the slot 20 according to a predetermined rule, and end portions of the plurality of segment conductors 30 are electrically connected according to a predetermined rule.

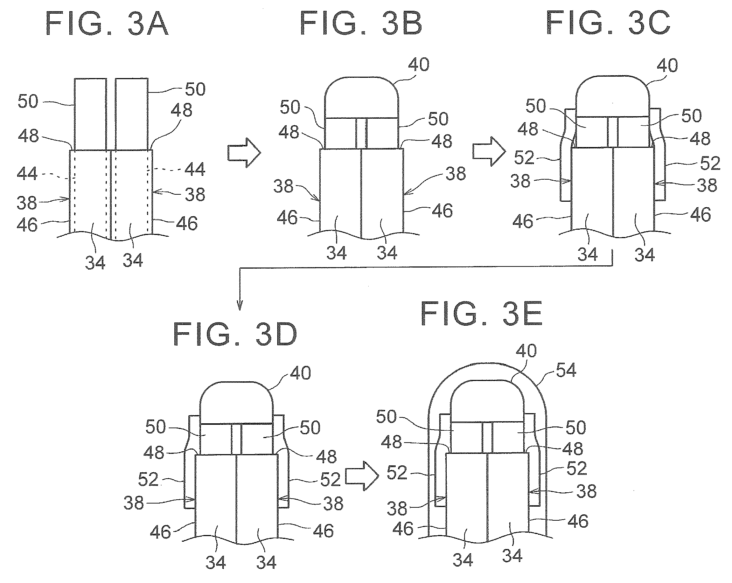

The U-shaped segment conductor 30 is constituted, for example, by a conductor wire including an electrical conductor 44 (see FIGS. 3A-3E) such as a copper wire, and an insulation coating 46 (see FIGS. 3A-3E) formed by covering the electrical conductor 44 with enamel resin or the like. In the present embodiment, the segment conductor 30 is formed of a square lead wire having a section in a rectangular shape such as an oblong shape. Further, as illustrated in FIG. 2, the segment conductor 30 includes a turned portion 32 formed by bending in a mountain shape, and leg portions 34 extending from both sides of the turned portion 32.

Two leg portions 34 of the U-shaped segment conductors 30 are placed to be inserted into the slot 20 from one axial end side of the stator core 12 illustrated in FIG. 1. The leg portions 34 extended from the slots 20 on the other axial end side of the stator core 12 are each bent according to a predetermined rule, so that an oblique portion 36 and an end portion 38 are formed as illustrated in FIG. 2. Note that, in the leg portion 34 of the segment conductor 30 in FIG. 2, a part 33 extending along an up-down direction in FIG. 2 serves as a part placed inside the slot 20 of the stator core 12.

The end portion 38 of one of the leg portions 34 of the segment conductor 30 formed by bending is joined to an end portion 38 of a leg portion of another segment conductor 30a placed to be inserted radially inwardly into the same slot 20 and formed by bending. Further, the end portion 38 of the other one of the leg portions 34 of the segment conductor 30 is joined, by welding or the like, for example, to an end portion 38 of a leg portion of further another segment conductor 30b inserted radially inwardly into the same slot 20 and formed by bending. In the following description, a part where end portions of leg portions of the segment conductors 30 are joined is referred to as a joining portion 40.

The stator coil 14 is formed such that the segment conductors 30 are connected as described above. In a case where a rotary electric machine in which the stator 10 is used is a three-phase alternating current synchronous rotary electric machine, the stator coil 14 is constituted by coils of a U-phase, a V-phase, and a W-phase. One end portions of respective phase coils are connected to an input terminal portion (not shown) and the other end portions of the respective phase coils are connected to each other by a neutral line (described later).

Referring now to FIG. 1, in the stator 10 according to the present embodiment, leg portions 34 of six segment conductors 30 are inserted and arranged in each of the slots 20. End portions 38 of those respective leg portions 34 of the segment conductors 30 which extend from each of the slots 20 are arranged along a radial direction of the stator 10, and every two end portions 38 are connected by welding or the like. Accordingly, in the present embodiment, three joining portions 40 are placed along the radial direction of the stator 10 and placed at intervals in a circumferential direction thereof. Note that the number of leg portions 34 of the segment conductors 30 placed to be inserted into each of the slots 20 can be modified appropriately according to the specification of the rotary electric machine in which the stator 10 is used.

In the stator coil 14, the oblique portions 36 and the end portions 38 of the leg portions 34 of respective segment conductors 30 constitute a coil end portion 15 projecting in an annular shape from the axial one end side of the stator core 12. In the meantime, the other end portions 14U, 14V, 14W of respective phase coils constituting the stator coil 14 are placed apart from the coil end portion 15 of the stator coil 14, as illustrated in FIG. 1.

More specifically, the other end portions 14U, 14V, 14W of respective phase coils are extended radially outwardly from the coil end portion 15 once, and then bent in an L-shape. The other end portion 14U of the U-phase coil and the other end portion 14V of the V-phase coil are electrically connected by a first neutral line 17 and the other end portion 14V of the V-phase coil and the other end portion 14W of the W-phase coil are electrically connected by a second neutral line 19. Similarly to the segment conductor 30, the first and second neutral lines 17, 19 are formed of a square lead wire coated with an insulation coating and having conductor exposed portions at both ends. The other end portions 14U, 14V, 14W of respective phase coils are connected to respective end portions of the first and second neutral lines 17, 19, by welding or the like, for example. Thus, connecting portions 41 between the other end portions 14U, 14V, 14W of respective phase coils and the first and second neutral lines 17, 19 are placed so as to be distanced radially outwardly from the coil end portion 15. Note that the connecting portions 41 are included in a joining portion in end portions of segment conductors in the present invention.

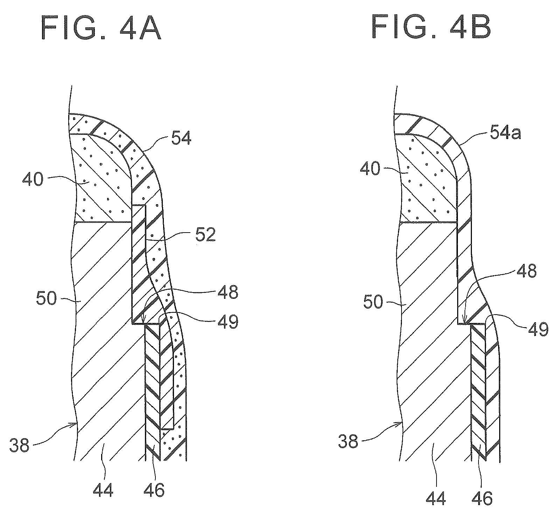

Referring now to FIGS. 3A to 3E and FIG. 4, the following describes joining and insulation coating in the end portions of the leg portions 34 of the segment conductors 30. FIGS. 3A to 3E are views illustrating a state where end portions of the segment conductors 30 are joined and coated in an insulated manner in order of FIGS. 3A to 3E.

As illustrated in FIG. 3A, a conductor exposed portion 50 where the insulation coating 46 is removed to expose the electrical conductor 44 is formed in the end portion 38 of the leg portion 34 of the segment conductor 30 placed to be inserted into the slot 20 of the stator core 12. Hereby, a stepped portion 48 is formed in a boundary between the insulation coating 46 and the conductor exposed portion 50. A width of the stepped portion 48 (that is, a dimension between a surface of the insulation coating 46 and a surface of the conductor exposed portion 50) may correspond to only a thickness of the insulation coating 46 or may be constituted by the insulation coating 46 and a part where the conductor 44 is removed. The stepped portion 48 has an angular edge around the leg portion 34.

The leg portions 34 of the segment conductors 30 in each of which the conductor exposed portion 50 is formed are placed to be inserted into the slot 20 of the stator core 12 in a state where the leg portions 34 are arranged in a radial direction of the stator core 12, and end portions 38 of two leg portions 34 connected to each other are arranged as illustrated in FIG. 3A by bending formation (a first step). In this state, tips of the end portions 38 are joined by welding or the like, so that a joining portion 40 is formed as illustrated in FIG. 3B (a second step). Hereby, the end portions 38 of the segment conductors 30 are electrically connected so that the stator coil 14 wound around the stator core 12 is formed.

Subsequently, as illustrated in FIG. 3C, an insulating member 52 having a tube shape is fitted from a joining-portion-40 side, so as to be put around the stepped portion 48 (a third step). At this time, the insulating member 52 is placed over the conductor exposed portion 50 and the insulation coating 46. As the insulating member 52, a tube made of an insulation material such as fluorinated resin and having moderate elasticity can be preferably used, for example. Further, the insulating member 52 of the present embodiment is made of a resin material having a heat-shrinkable property. By putting the insulating member 52 as such, the angular stepped portion 48 is covered up in a curved shape.

Subsequently, as illustrated in FIG. 3D, two end portions 38 to which the tubular insulating member 52 is fitted is preheated, so as to thermally shrink the insulating member 52. Hereby, the insulating member 52 is tightly attached onto the stepped portion 48 placed in the boundary between the insulation coating 46 and the conductor exposed portion 50.

Subsequently, as illustrated in FIG. 3E, the insulating layer 54 is formed in an adhesion manner around the joining portion 40, the insulating member 52, and the insulation coating 46 (a fourth step). The insulating layer 54 is formed by attaching powder resin mainly containing epoxy resin or the like, for example. The powder resin may be used such that an appropriate amount of a thickener (e.g., fused silica or the like) is mixed therewith.

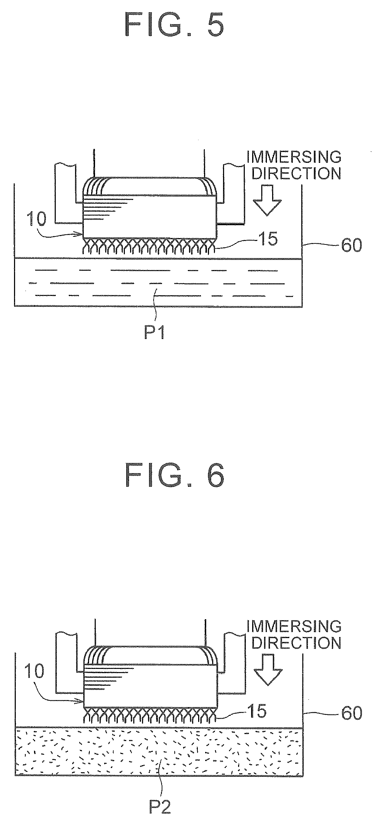

For example, the insulating layer 54 is formed as follows. In a state where the insulating member 52 is put on each joining portion 40 as illustrated in FIG. 3D, the coil end portion 15 (see FIG. 1) of the stator coil 14 is heated to a predetermined temperature by use of an electromagnetic heating device or the like, for example. As illustrated in FIG. 5, the stator 10 is maintained so that the coil end portion 15 faces downward, and the coil end portion 15 is immersed into powder resin P1 accommodated in a housing tank 60. At this time, by sending dry air into in the housing tank 60 so as to float the powder resin P1, the powder resin P1 can be efficiently attached around the heated end portions 38 (the joining portion 40, the insulating member 52, the conductor exposed portions 50, and the insulation coatings 46). Hereby, the powder resin P1 is melted and hardened on the joining portion 40, the insulating member 52, and the insulation coatings 46 thus heated. As a result, the insulating layer 54 is formed to be attached around two end portions 38 joined to each other by the joining portion 40.

Note that the present embodiment deals with an example in which the insulating layer 54 is made of the powder resin P1, but the present invention is not limited to this embodiment. As illustrated in FIG. 6, the insulating layer 54 may be formed to be attached such that a high-viscosity resin material P2 mainly containing epoxy resin or the like, for example, is accommodated in the housing tank 60 in a melted state, and the coil end portion 15 is immersed downward in the resin material P2.

FIG. 4A is an enlarged sectional view illustrating, in a split manner, that end portion 38 of the segment conductor 30 which is coated with the insulating layer 54 in the stator 10 of the present embodiment, and FIG. 4B is an enlarged sectional view illustrating, in a split manner, that end portion of a segment conductor which is coated with an insulating layer 54a in a stator of a comparative example.

Referring to FIG. 4B, in a case where the insulating layer 54a made of powder resin P1 is formed to be attached around an end portions 38 including a joining portion 40, a conductor exposed portion 50, and an insulation coating 46 in a leg portion 34 of a segment conductor 30 without putting an insulating member 52 thereon, an edge 49 of a stepped portion 48 formed in a boundary between the insulation coating 46 and the conductor exposed portion 50 is squarish, so the powder resin P1 is hard to be attached thereto. Because of this, a thickness of the insulating layer 54a becomes thinner at a part corresponding to the edge 49 than the other parts, which may result in that an insulation property may be secured insufficiently.

In this regard, as illustrated in FIG. 4A, according to the stator 10 of the present embodiment, coating with powder resin is performed in a state where the stepped portion 48 is covered, in a curved shape, with the tubular insulating member 52 that is fitted over the conductor exposed portion 50 and the insulation coating 46. This allows the powder resin P1 to be uniformly attached onto the joining portion 40, the insulating member 52, and the insulation coating 46, thereby making it possible to form the insulating layer 54 having a sufficient insulating property in one insulation material adhesion step.

Further, a configuration in which the insulating layer 54 is formed to be attached in a state where the edge 49 of the stepped portion 48 is covered with the insulating member 52 is particularly preferably applied to the connecting portions 41 that connect the end portions 14U, 14V, 14W of respective phase coils of the stator coil 14 to the first and second neutral lines 17, 19. The reason is as follows: in the coil end portion 15 configured such that the end portions 38 of the segment conductor 30 and the joining portions 40 are arranged in groups, a temperature decrease in the powder resin adhesion step is relatively moderate after they are heated by the electromagnetic heating device or the like, for example, whereas the connecting portions 41 are placed apart from the coil end portion 15, so that the connecting portions 41 easily make contact with an external air, thereby resulting in that a temperature decreases relatively early, so that the powder resin tends to be harder to be attached to the edge 49 of the stepped portion 48.

Note that the present invention is not limited to the above embodiment and its modifications, and various modifications and alternations can be made within a range that is not beyond what is described in Claims of the present application and within its equivalent range.

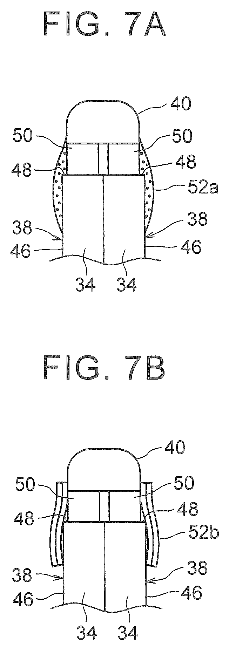

For example, the above embodiment deals with an example in which the insulating member 52 for covering the stepped portion 48 is a tube, but the present invention is not limited to this embodiment. For example, as illustrated in FIG. 7A, the stepped portion 48 may be covered by applying thereto, for example, an insulating resin material (an insulating member) 52a such as an adhesive so as to form a curved surface. Further, as illustrated in FIG. 7B, the stepped portion 48 may be covered in a curved shape by winding a resin adhesive tape (an insulating member) 52b around the stepped portion 48 so as to be attached thereto.

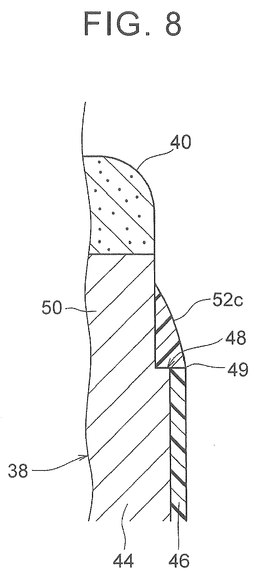

Further, as illustrated in FIG. 8, an insulating resin material (an insulating member) 52c such as an adhesive may be applied, for example, to only a side face of the conductor exposed portion 50 and the stepped portion 48, so that a curved surface of the insulating resin material 52c is extended from the conductor exposed portion 50 (or the joining portion 40) so as to be flush with a surface of the insulation coating 46. That is, the insulating resin material 52c may be placed so as to cover the stepped portion 48 just by a thickness of the insulation coating 46 that faces the stepped portion 48. Even by covering the stepped portion 48 with the insulating resin materials 52c as such, the edge 49 is eliminated, so that it is possible to obtain the same effect as in the above embodiment.

Further, in the above embodiment, after the insulating tube 52 is fitted around the end portion 38 of the segment conductor 30 (the first substep), the insulating tube 52 is thermally shrunk by preheating, so that the insulating tube 52 is tightly attached to the conductor exposed portion 50 and the insulation coating 46 (the second substep). However, the present invention is not limited to this embodiment. The thermal shrinkage step described referring to FIG. 3D may be omitted if a fitted state of the insulating tube 52 around the stepped portion 48 by its own elasticity can be maintained and does not fall even if the coil end portion 15 faces downward. In this case, the insulating tube 52 may not have a heat-shrinkable property.

## Claims

1. A rotary electric machine stator **characterized by** comprising:
an annular stator core (12) having a plurality of slots provided in a circumferential direction of the annular stator core;
a stator coil (14) constituted by a plurality of segment conductors (30) placed to be inserted into each of the slots, the stator coil (14) wounding around the annular stator core (12), end portions (38) of the plurality of segment conductors (30) being joined to each other, and the segment conductors (30) being each constituted by an electric conductor (44) and an insulation coating (46) covering the electric conductor; and
an insulating layer (54) provided around the end portions (38) of the segment conductors including a joining portion (40) at which the end portions (38) of the plurality of segment conductors (30) are jointed, wherein
a conductor exposed portion (50) in which the insulation coating (46) is removed is formed in each of end portions (38) of the segment conductors (30) which are joined to each other;
an insulating member (52) is provided on an outer circumference of the segment conductors over the insulation coating (46) and the conductor exposed portion (50); and
the insulating layer (54) is formed to be attached onto the insulating member (52).

2. The rotary electric machine stator according to claim 1, wherein:
the insulation member (52) is provided to cover a stepped portion formed in a boundary between the insulation coating (46) and the conductor exposed portion (50).

3. The rotary electric machine stator according to claim 1 or 2, wherein:
the insulating member (52) is an annular member covering the conductor exposed portion (50) and part of the insulation coating (46); and
an upper end of the joining portion (40) is exposed from the annular member.

4. The rotary electric machine stator according to any one of claims 1 to 3, wherein the insulating member (52) is a tube having a heat-shrinkable property or elasticity.

5. The rotary electric machine stator according to any one of claims 1 to 4, wherein:
the stator coil (14) includes coil portions of a plurality of phases, and includes a neutral line (17, 19) for connecting one end portions of the coil portions of respective phases to each other at a position apart from a coil end portion (15) of the stator coil; and
the insulating member and the insulating layer are applied to a connecting portion (41) for connecting each of the end portions of the coil portions of the respective phases to the neutral line.

6. A manufacturing method of a rotary electric machine stator, the manufacturing method **characterized by** comprising:
a first step of placing leg portions (34) of a plurality of segment conductors (30) so as to be inserted into a slot of a stator core (12) so that the leg portions are aligned in a radial direction, the plurality of segment conductors (30) each having a generally U-shape and each having a leg portion (34) configured such that a conductor exposed portion (50) in which an insulation coating is removed is formed in an end portion of the leg portion;
a second step of joining the conductor exposed portions (50) formed in the end portions (38) of the leg portions (34) of the segment conductors and forming a stator coil (14) wound around the stator core (12);
a third step of fitting an insulating tube (52) so as to cover a stepped portion (48) formed in a boundary between the conductor exposed portion (50) and the insulation coating (46) of each of the segment conductors (30) joined to each other; and
a fourth step of forming an insulating layer (54) so as to be attached around the end portions including a joining portion (41) at which the end portions (38) of the plurality of segment conductor are jointed each other.

7. The manufacturing method of the rotary electric machine stator, according to claim 6, wherein
the third step includes
a first substep of fitting the insulating tube around the stepped portion, and
a second substep of tightly attaching the insulating tube to the conductor exposed portion and the insulation coating by thermal shrinkage.

8. A rotary electric machine stator **characterized by** comprising:
an annular stator core (12) having a plurality of slots in a circumferential direction of the annular stator core;
a stator coil (14) constituted by a plurality of segment conductors (30) placed to be inserted into each of the slots, the stator coil (14) wounding around the annular stator core (12), the segment conductors (30) each including an electric conductor (44) and an insulation coating (46) for covering the electric conductor except an end portion (38) of the electric conductor;
an insulating member (52) placed over an conductor exposed portion and the insulation coating (46), the conductor exposed portion being the end portion (38) of the electric conductor which is not covered with the insulation coating (46); and
an insulating layer (54) attached to a surface of the insulating member (52) around the end portions of the conductors including a joining portion at which the end portions (38) of the plurality of segment conductors (30) are jointed.
